# EUROPÄISCHE PATENTSCHRIFT

(11) **EP 1 791 902 B1**
(45) Veröffentlichungstag und Bekanntmachung des Hinweises auf die Patenterteilung: **28.12.2011**
(21) Anmeldenummer: 05782454.2
(22) Anmeldetag: 31.08.2005
(51) Int. Cl.: C08K 5/00, C08K 5/3492, C08L 77/00

(54) **HALOGENFREIE FLAMMGESCHÜTZTE THERMOPLASTISCHE FORMMASSEN AUF BASIS VON POLYAMID MIT ERHÖHTER GLÜHDRAHTBESTÄNDIGKEIT**
NON-HALOGENATED FLAME-RESISTANT THERMOPLASTIC MOULDED MASSES MADE FROM POLYAMIDE WITH INCREASED INCANDESCENT WIRE RESISTANCE
MATIERES A MOULER THERMOPLASTIQUES IGNIFUGEES ET SANS HALOGENE A BASE DE POLYAMIDE PRESENTANT UNE RESISTANCE ACCRUE AUX FILAMENTS CHAUFFANTS

(30) Priorität: 13.09.2004 DE 102004044131; 07.10.2004 DE 102004048876
(43) Veröffentlichungstag der Anmeldung: 06.06.2007
(73) Patentinhaber: LANXESS Deutschland GmbH, 51369 Leverkusen (DE)
(72) Erfinder: Dr. ENDTNER, Jochen, 50679 Köln (DE); JOACHIMI, Detlev, 47800 Krefeld (DE); WEIDER, Richard, 51381 Leverkusen (DE)
(86) Internationale Anmeldenummer: PCT/EP2005/009362
(87) Internationale Veröffentlichungsnummer: WO 2006/029711

(56) Entgegenhaltungen:
- FR-A- 2 864 097
- US-A1- 2002 002 228
- US-A1- 2002 096 669

## Beschreibung

Die vorliegende Erfindung betrifft thermoplastische Formmassen enthaltend unverzweigtes, thermoplastisches Polyamid, ein Phosphin- oder Diphosphinsäuresalz, eine stickstoffhaltige Flammschutzmittelkombination sowie mindestens eine sauerstoffhaltige, stickstoffhaltige oder schwefelhaltige Metallverbindung sowie die Herstellung und die Verwendung der erfindungsgemäßen Formmassen zur Herstellung von Fasern Folien und Formkörper jeglicher Art.

Aufgrund ihrer chemischen Zusammensetzung sind viele Kunststoffe leicht brennbar. Um die von Kunststoffverarbeitem und teilweise vom Gesetzgeber geforderten hohen Flammschutzanforderungen erreichen zu können, müssen Kunststoffe daher in der Regel mit Flammschutzmitteln ausgerüstet werden. Hierzu sind eine Vielzahl unterschiedlicher Flammschutzmittel und Flammschutzmittelsynergisten bekannt und auch kommerziell erhältlich. Aufgrund der vorteilhafteren Brandnebenerscheinungen bezüglich Rauchgasdichte und Rauchgaszusammensetzung sowie aus ökologischen Gründen werden nicht-halogenierte Flammschutzmittelsysteme seit einiger Zeit bevorzugt eingesetzt.

Unter den nicht-halogenierten Flammschutzmitteln haben sich insbesondere für thermoplastische Polymere die Salze von Phosphinsäuren (Phosphinate) als besonders wirksam erwiesen (DE-A-2 252 258 (= US 3 900 444) und DE-A-2 447 727 (= US 4 036 811)). Dabei werden einige Derivate dieser Flammschutzmittelklasse insbesondere aufgrund ihres geringen negativen Einflusses auf die mechanischen Eigenschaften der thermoplastischen Formmassen geschätzt.

Darüber hinaus wurden synergistische Kombinationen von Phosphinaten mit bestimmten stickstoffhaltigen Verbindungen, insbesondere mit Melaminderivaten, gefunden, die in einer ganzen Reihe von Polymeren als Flammschutzmittel effektiver wirken, als die Phosphinate allein (WO-A 2002/28953 (= US 2004021135A1), WO-A 97/01664 (= US 5 669 095) sowie DE-A-197 34 437 (= US 6 207 736) und DE-A-197 37 727 (= US 6 509 401)).

Ferner wurde gefunden, dass die Flammschutzwirkung der verschiedenen Phosphinate in thermoplastischen Polymeren auch durch Zusätze kleiner Mengen anorganischer bzw. mineralischer Verbindungen, die keinen Stickstoff enthalten, deutlich verbessert werden kann und dass die genannten Zusätze auch die Flammschutzwirkung von Phosphinaten in Kombination mit stickstoffhaltigen Synergisten verbessern können (EP-A 024 167 (= GB 8024901 A), WO-A 2004/016684)).

Aus US 2002/0002228 A1 ist eine flammgeschützte Polyamidzusammensetzung bekannt, die Melamincyanurat und einen Whisher auf Basis eines Metallborats enthält.

US 2002/009669 A1 beschreibt halogenfreie flammgeschützte Zusammensetzungen mit organischen Phosphorverbindungen, Melamin oder einem Derivat davon oder einem Melaminphosphat und einer Polymerverbindung aus einem Olefin und einer Verbindung die Säure-, Säureanhydrid oder Epoxygruppen enthält.

Bei der Verwendung von phosphinathaltigen Flammschutzmittelsystemen kam es insbesondere bei Verarbeitungstemperaturen oberhalb 300°C anfänglich zu partiellem Polymerabbau, zu Verfärbungen des Polymers und zur Qualmentwicklung bei der Verarbeitung. Diese Schwierigkeiten ließen sich jedoch durch Zusatz von basischen oder amphoteren Oxiden, Hydroxiden, Carbonaten, Silikaten, Boraten oder Stannaten eindämmen (WO-A 2004/022640).

Als besonders problematisch gilt aber nach wie vor das Verhalten der mit phosphinathaltigen Flammschutzmittelsystemen ausgerüsteten thermoplastischen Formmassen hinsichtlich ihrer Glühdrahtbeständigkeit nach IEC 60695-2, insbesondere der Glühdrahtentzündlichkeitsprüfung nach IEC 60695-2-13 ("GWTT-Prüfung"), bei dem sich die plattenförmige Formmasse während des Kontaktes mit einem glühenden Draht nicht entzünden darf, wobei "Entzündung" hier als eine Flammenerscheinung ≥ 5s definiert wurde. Diese GWIT-Prüfung ist auch ein wesentlicher Bestandteil der IEC60335-1, in der für bestimmte strom- und spannungsführende Bauteile in unbeaufsichtigten Haushaltsgeräten, Materialien mit einer GWIT-Klassifizierung von mindestens 775°C gefordert werden. Als besonders anspruchsvoll innerhalb der IEC60335-1 gilt die optionale, aber von vielen Anwendern geforderte Glühdrahtentzündlichkeitsprüfung am Fertigteil, bei der während des Bauteilkontaktes mit einem 750°C heißen Glühdraht allenfalls eine Flammenerscheinung von maximal 2s zulässig ist. Aufgrund der vielfältigen Geometrien und Konstruktionsweisen dieser Fertigteile kann aber nur dann von einer hohen Erfolgswahrscheinlichkeit bei der Fertigteilprüfung nach IEC 60335-1 ausgegangen werden, wenn die zugrunde liegende thermoplastische Formmasse auch in der GWIT-Prüfung an der Platte (IEC60695-2-13) bei Glühdrahttemperaturen von mindestens 750°C und unterschiedlichen Wandstärken reproduzierbar keine Entzündung mit Flammenentwicklung > 2s zeigen.

Es war daher Aufgabe der vorliegenden Erfindung, halogenfreie, flammgeschützte, thermoplastische Polyamid-Formmassen auf Basis phosphinathaltiger Flammschutzsysteme zur Verfügung zu stellen, die bei der GWIT-Prüfung nach IEC 60695-2-13 bei einer Glühdrahttemperatur von mindestens 750°C auch bei verschiedenen Wandstärken reproduzierbar keine Entzündung [keine Flammenentwicklung > 2 s] zeigen.

Weiterhin war es Aufgabe der vorliegenden Erfindung, dass das von den phosphinathaltigen flammgeschützten Polyamid-Formmassen bekannte ausgeglichene Eigenschaftsprofil hinsichtlich thermischer und elektrischer Eigenschaften, sowie hinsichtlich Flammschutz (UL94 V0 ab 0,8mm) und Mechanik (Schlagzähigkeit nach IZOD ISO 180 1/U > 45kJ/m² und Festigkeit größer als 200 MPa) auch bei verbesserter Glühdrahtbeständigkeit weitestgehend erhalten bleiben.

Es wurde nun überraschend gefunden, dass die Glühdrahtbeständigkeit nach IEC 60695-2-13 (GWIT) in phosphinathaltigen flammgeschützten thermoplastischen Polyamiden deutlich verbessert werden kann, wenn die Formmasse zusätzlich zu den Phosphinaten eine spezielle Kombination aus mindestens zwei verschiedenen stickstoffhaltigen Flammschutzmitteln sowie mindestens einer sauerstoff-, stickstoff- oder schwefelhaltigen Metallverbindung der zweiten Haupt- oder Nebengruppe enthält. Bei dieser speziellen Kombination bleibt auch das ausgeglichene Eigenschaftsprofil hinsichtlich elektrischer, thermischer und mechanischer weitestgehend erhalten.

Gegenstand der Erfindung ist somit eine thermoplastische Formmasse, enthaltend
A) 20 bis 97 Gew.-% eines unverzweigten thermoplastischen Polyamids,
B) 1 bis 30 Gew.-%, bevorzugt 1 bis 20 Gew.-%, besonders bevorzugt 5 bis 15 Gew.-%, der Gesamtzusammensetzung eines oder mehrerer Phosphinsäuresalze der Formel (I) und/oder eines oder mehrerer Diphosphinsäuresalze der Formel (II) und/oder deren Polymere, 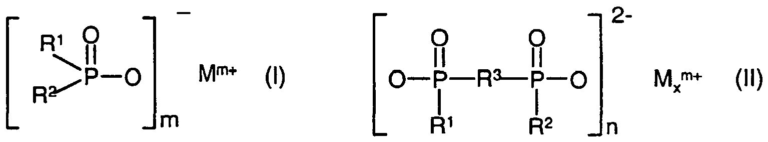 worin
   - R¹, R²: gleich oder verschieden sind und für Wasserstoff und/oder lineares oder verzweigtes C₁-C₆-Alkyl, und/oder für Aryl stehen;
   - R³: für lineares oder verzweigtes C₁-C₁₀-Alkylen, C₆-C₁₀-Arylen oder für C₁-C₆-Alkylarylen oder Aryl-C₁-C₆-alkylen steht,
   - M: für Erdalkalimetalle, Alkalimetalle, Aluminium, Zink, Titan, Zirkon, Silizium, Zinn und/oder eine protonierte Stickstoffbase steht;
   - m: für 1 bis 4 steht;
   - n: für 1 bis 3 steht und
   - x: für 1 und 2 steht,
C) 1-40 Gew.-% einer stickstoffhaltigen Flammschutzmittelkombination aus
   C1) 0,1 bis 25 Gew.-%, bevorzugt 0,2 bis 10%, besonders bevorzugt 0,5 bis 5% bezogen auf 100 Gew.-% der Gesamtzusammensetzung Melamincyanurat und
   C2) mindestens 0,1 bis 25 Gew.%, bevorzugt 1 bis 15 Gew.%, besonders bevorzugt 2 bis 10 Gew.% bezogen auf 100 Gew.% der Gesamtzusammensetzung, eines weiteren stickstoffhaltigen Flammschutzmittels ungleich Melamincyanurat, bevorzugt Umsetzungsprodukte des Melamins mit Phosphorsäure oder kondensierten Phosphorsäuren bzw. Umsetzungsprodukte von Kondensationsprodukten des Melamins mit Phosphorsäure oder kondensierten Phosphorsäuren, besonders bevorzugt Melaminpolyphosphat, Melampolyphosphat, Melonpolyphosphat und Melempolyphosphat, ganz besonders bevorzugt Melaminpolyphosphat, und
D) 0,1 bis 10 Gew.%, bevorzugt 0,5 bis 5 Gew.% besonders bevorzugt 0,75 bis 3,5 Gew.% mindestens einer Metallverbindung der Reihe ZnO, ZnS, TiO₂, MgCO₃, CaCO₃, Zinkborat, CaO, MgO, Mg(OH)₂, TiN, Bornitrid, Mg₃N₂, Zn₃N₂, Zn₃(PO₄)₂, Ca₃(PO₄)₂, Calciumborat, Magnesiumborat oder deren Mischungen, besonders bevorzugt Zinkborat und Zinksulfid.

In einer bevorzugten Ausführungsform können die thermoplastischen Formmassen zusätzlich zu den Komponenten A) bis D) noch E) 0,01 bis 5 Gew.%, bevorzugt 0,05 bis 3 Gew.%, besonders bevorzugt 0,1 bis 2 Gew.% mindestens eines Gleit- und/oder Entformungsmittels enthalten.

In einer bevorzugten Ausführungsform können die thermoplastischen Formmassen zusätzlich zu den Komponenten A) bis E) oder anstelle von E) noch die Komponente F) 0,1 bis 60 Gew.-%, bevorzugt 1 bis 50 Gew.-%, besonders bevorzugt 10 bis 40 Gew.% eines oder mehrerer Füll- und Verstärkungsstoffe enthalten.

In einer weiteren bevorzugten Ausführungsform können die thermoplastischen Formmassen zusätzlich zu den Komponenten A) bis F) oder anstelle der Komponenten E) und/oder F) noch G) 0,01 bis 40 Gew.%, bevorzugt 0,01 bis 20 Gew.-%, besonders bevorzugt 0,1 bis 15 Gew.% jeweils bezogen auf die Gesamtzusammensetzung weitere Additive enthalten.

Die Summe der Anteile der Komponenten ergänzt sich jeweils zu 100 Gew.-%.

Überraschenderweise zeigen die thermoplastischen Formmassen enthaltend die Komponenten A), B), C1), C2) und D) die gemäß IEC 60695-2-13 erforderliche Glühdrahtbeständigkeit und liefern reproduzierbar keine Entzündung [keine Flammenentwicklung > 2s], wobei sie gleichzeitig das von phosphinathaltig flammgeschützten Polyamid-Formmassen bekannte ausgeglichene Eigenschaftsprofil beibehalten.

Unter thermoplastischen Polymeren werden laut Hans Domininghaus in "Die Kunststoffe und ihre Eigenschaften", 5. Auflage (1998), S. 14, Polymere verstanden, deren Molekülketten keine oder auch mehr oder weniger lange und in der Anzahl unterschiedliche Seitenverzweigungen aufweisen, die in der Wärme erweichen und nahezu beliebig formbar sind.

Als Komponente A) enthalten die Zusammensetzungen erfindungsgemäß mindestens ein unverzweigtes thermoplastisches Polyamid. Die erfindungsgemäßen Polyamide können nach verschiedenen Verfahren hergestellt und aus sehr unterschiedlichen Bausteinen synthetisiert werden und im speziellen Anwendungsfall allein oder in Kombination mit Verarbeitungshilfsmitteln, Stabilisatoren, polymeren Legierungspartnem (z.B. Elastomeren) oder auch Verstärkungsmaterialien (wie z.B. mineralischen Füllstoffen oder Glasfasern), zu Werkstoffen mit speziell eingestellten Eigenschaftskombinationen ausgerüstet werden. Geeignet sind auch Blends mit Anteilen von anderen Polymeren z.B. von Polyethylen, Polypropylen, ABS (AcrylnitrilButadien-Styrol-Copolymere), wobei ggf. ein oder mehrere Kompatibilisatoren eingesetzt werden können. Die Eigenschaften der Polyamide lassen sich durch Zusatz von Elastomeren verbessern, z. B. im Hinblick auf die Schlagzähigkeit von z. B. verstärkten Polyamiden. Die Vielzahl der Kombinationsmöglichkeiten ermöglicht eine sehr große Zahl von Produkten mit unterschiedlichsten Eigenschaften.

Zur Herstellung von Polyamiden sind eine Vielzahl von Verfahrensweisen bekannt geworden, wobei je nach gewünschtem Endprodukt unterschiedliche Monomerbausteine bzw. verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung von Polyamiden laufen meist über die Polykondensation in der Schmelze. In diesem Rahmen wird auch die hydrolytische Polymerisation von Lactamen als Polykondensation verstanden.

Bevorzugte Polyamide sind teilkristalline Polyamide, die ausgehend von Diaminen und Dicarbonsäuren und/oder Lactamen mit wenigstens 5 Ringgliedern oder entsprechenden Aminosäuren hergestellt werden können.

Als Edukte kommen aliphatische und/oder aromatische Dicarbonsäuren wie Adipinsäure, 2,2,4-und 2,4,4-Trimethyladipinsäure, Azelainsäure, Sebazinsäure, Isophthalsäure, Terephthalsäure, aliphatische und/oder aromatische Diamine wie z.B. Tetramethylendiamin, Hexamethylendiamin, 1,9-Nonandiamin, 2,2,4- und 2,4,4-Trimethylhexamethylendiamin, die isomeren Diamino-dicyclohexylmethane. Diaminodicyclohexylpropane, Bis-aminomethyl-cyclohexan, Phenylendiamine, Xylylendiamine, Aminocarbonsäuren wie z.B. Aminocapronsäure, bzw. die entsprechenden Lactame in Betracht. Copolyamide aus mehreren der genannten Monomeren sind eingeschlossen. Besonders bevorzugt werden Caprolactame, ganz besonders bevorzugt wird ε-Caprolactam eingesetzt.

Besonders geeignet sind weiterhin die meisten auf PA6, PA66 und anderen aliphatischen oder/und aromatischen Polyamiden bzw. Copolyamiden basierenden Compounds, bei denen auf eine Polyamidgruppe in der Polymerkette 3 bis 11 Methylengruppen kommen.

Die erfindungsgemäß hergestellten Polyamide können auch im Gemisch mit anderen Polyamiden und/oder weiteren Polymeren eingesetzt werden.

Den Polyamiden können übliche Additive wie z.B. Entformungsmittel, Stabilisatoren und/oder Fließhilfsmittel bereits in der Schmelze zugemischt oder auf der Oberfläche aufgebracht werden.

Als Komponente B) enthalten die Zusammensetzungen erfindungsgemäß eines oder mehrere Phosphinsäuresalze der Formel (I) und/oder eines oder mehrere Diphosphinsäuresalze der Formel (II) und/oder deren Polymere, worin
- R¹, R²: gleich oder verschieden sind und für Wasserstoff und/oder lineares oder verzweigtes C₁-C₆-Alkyl und/oder für Aryl stehen,
- R³: für lineares oder verzweigtes C₁-C₁₀-Alkylen, C₆-C₁₀-Arylen und/oder für C₁-C₆-Alkylarylen oder für Aryl-C₁-C₆-alkylen steht,
- M: für Erdalkalimetalle, Alkalimetalle, Aluminium, Zink, Titan, Zirkon, Silizium, Zinn und/oder eine protonierte Stickstoffbase steht,
- m: für 1 bis 4 steht,
- n: für 1 bis 3 steht und
- x: für 1 und 2 steht.

Bevorzugt steht M für Magnesium, Calcium, Aluminium und/oder Zink. Unter protonierten Stickstoffbasen werden bevorzugt die protonierten Basen von Ammoniak, 1,3,5-Triazinverbindungen und Triethanolamin, besonders bevorzugt Melamin verstanden. Bevorzugt sind R¹, R² gleich oder verschieden und bedeuten C₁-C₆-Alkyl, linear oder verzweigt und/oder Phenyl. Besonders bevorzugt sind R¹, R² gleich oder verschieden und bedeuten Methyl, Ethyl, n-Propyl, iso-Propyl, n-Butyl, tert.-Butyl, n-Pentyl und/oder Phenyl. Bevorzugt bedeutet R³ Methylen, Ethylen, N-Propylen, iso-Propylen, n-Butylen, tert.-Butylen, n-Pentylen, n-Octylen, n-Dodecylen, Phenylen, Naphthylen, Methyl-phenylen, Ethylphenylen, tert.-Butylphenylen, Methylnaphthylen, Ethylnaphthylen, tert.-Butylnaphthylen, Phenylmethylen, Phenylethylen, Phenylpropylen oder Phenylbutylen. Besonders bevorzugt bedeutet R³ Phenylen oder Naphthylen. Geeignete Phosphinate sind in der WO-A 97/39053 (= US 6 365 071) beschrieben, deren Inhalt in Bezug auf die Phosphinate von der vorliegenden Anmeldung mit umfasst wird. Besonders bevorzugte Phosphinate im Sinne der vorliegenden Erfindung sind Aluminium-, Calcium- und Zinksalze des Dimethylphosphinats, des Ethylmethylphosphinats, des Diethylphosphinats und des Methyl-n-propylphosphinats sowie deren Mischungen.

Bevorzugt steht m für 2 und 3, besonders bevorzugt für 3

Bevorzugt steht n für 1 und 3, besonders bevorzugt für 3

Bevorzugt steht x für 1 und 2, besonders bevorzugt für 2

Im Folgenden werden mit dem Begriff Phosphinsäuresalz, wie er im Rahmen der vorliegenden Erfindung zu verstehen ist, sowohl Salze der Phosphinsäuren, als auch Salze der Diphosphinsäuren und deren Polymere beschrieben.

Diese Phosphinsäuren, die in wässrigem Medium hergestellt werden, sind im wesentlichen monomere Verbindungen. In Abhängigkeit von den Reaktionsbedingungen können unter Umständen auch polymere Phosphinsäuresalze entstehen.

Geeignete Phosphinsäuren als Bestandteil der Phosphinsäuresalze sind beispielsweise Dimethylphosphinsäure, Ethyl-methylphosphinsäure, Diethylphosphinsäure, Methyl-n-propylphosphinsäure oder Diphenylphosphinsäure.

Die Salze der Phosphinsäuren gemäß der vorliegenden Erfindung können nach bekannten Verfahren hergestellt werden, wie sie beispielsweise in der EP-A 0 699 708 (= US 5 780 534) beschrieben werden, deren Inhalt von der vorliegenden Anmeldung mit umfasst wird. Die Phosphinsäuren werden dabei in wässriger Lösung mit Metallcarbonaten, Metallhydroxiden oder Metalloxiden umgesetzt.

Als Komponente C) enthalten die erfindungsgemäßen Zusammensetzungen eine spezielle Kombination aus mindestens zwei verschiedenen stickstoffhaltigen Flammschutzmitteln, von denen die Komponente C1) Melamincyanurat ist, die zu einem Anteil von 0,1 bis 25 Gew.-%, bevorzugt 0,2 bis 10 Gew.-%, besonders bevorzugt 0,5 bis 5 Gew.-% - bezogen auf alle Komponenten der Formmasse - enthalten ist. Unter Melamincyanurat versteht man das Reaktionsprodukt aus vorzugsweise äquimolaren Mengen von Melamin und Cyanursäure bzw. Isocyanursäure. Hierzu zählen u.a. sämtliche handelsüblichen und kommerziell verfügbaren Produktqualitäten. Beispiele hierfür sind u.a. Melapur^{®} MC 25 (Fa. CIBA Melapur, Basel, Schweiz) sowie Budit^{®} 315 (Fa.

Budenheim, Budenheim, Deutschland) oder Plastisan^{®} B bzw. Plastisan^{®} S (Fa. 3V, Bergamo, Italien). Das verwendete Melamincyanurat besteht aus Partikeln mit mittleren Teilchendurchmessern von 0,1 µm bis 100 µm, vorzugsweise von 0,1 µm bis 30 µm, besonders bevorzugt 0,1 µm bis 7 µm und kann oberflächenbehandelt bzw. mit bekannten Mitteln beschichtet sein. Hierzu zählen u.a. organische Verbindungen, die in monomerer, oligomerer und/ oder polymerer Form auf das Melamincyanurat aufgebracht sein können. Beispielsweise können Beschichtungssysteme verwendet werden, die auf Silizium-haltigen Verbindungen wie organofunktionalisierten Silanen oder Organosiloxanen basieren. Beschichtungen mit anorganischen Komponenten sind ebenfalls möglich. Melamincyanurat wird üblicherweise aus den Ausgangsstoffen in wässrigem Medium bei Temperaturen zwischen 90 und 100°C erhalten.

Komponente C) enthält neben Melamincyanurat C1) mindestens eine weitere stickstoffhaltige, als Flammschutzmittel oder Flammschutzmittelsynergist wirksame Komponente C2), die verschieden von Melamincyanurat ist. Hierzu sind Melamin, Melaminborat, Melaminoxalat, Melaminphosphat prim., Melaminphosphat sec. und Melaminpyrophosphat sec., polymeres Melaminphosphat sowie Neopentylglycolborsäuremelamin geeignet. Ebenfalls geeignet sind Guanidinsalze wie Guanidincarbonat, Guanidincyanurat prim., Guanidinphosphat prim., Guanidinphosphat sec., Guanidinsulfat prim., Guanidinsulfat sec., Pentaerythritborsäureguanidin, Neopentylglycolborsäureguanidin, Harnstoffphosphat sowie Harnstoffcyanurat. Darüber hinaus können auch Amelin, Amelid sowie Kondensationsprodukte des Melamins wie z.B. Melem, Melam, Melon bzw. höherkondensierte Verbindungen dieses Typs Verwendung finden. Geeignet sind ebenfalls Ammoniumpolyphosphat und Tris(hydroxyethyl)isocyanurat oder dessen Umsetzungsprodukte mit Carbonsäuren, Benzoguanamin und dessen Addukte bzw. Salze sowie dessen am Stickstoff substituierten Produkte sowie deren Salze und Addukte. Als weitere stickstoffhaltige Komponenten kommen Allantoin-Verbindungen, sowie deren Salze mit Phosphorsäure, Borsäure oder Pyrophosphorsäure sowie Glycolurile oder deren Salze in Frage. Es können auch anorganische stickstoffhaltige Verbindungen wie z.B. Ammoniumsalze verwendet werden.

Bei der Komponente C2) handelt es sich um Umsetzungsprodukte des Melamins mit Phosphorsäure oder kondensierten Phosphorsäuren bzw. Umsetzungsprodukte von Kondensationsprodukten des Melamins mit Phosphorsäure oder kondensierten Phosphorsäuren sowie Gemische der genannten Produkte. Unter den Umsetzungsprodukten mit Phosphorsäuren versteht man Verbindungen, die durch Umsetzung von Melamin oder den kondensierten Melaminverbindungen Melam, Melem oder Melon etc., mit Phosphorsäure entstehen. Beispiele hierfür sind Dimelaminphosphat, Dimelaminpyrophosphat, Melaminphosphat, Melaminpyrophosphat, Melaminpolyphosphat, Melampolyphosphat, Melonpolyphosphat und Melempolyphosphat bzw. gemischte Polysalze, wie sie z.B. in der WO-A 98/39306 (= US 6 121 445) beschrieben sind. Besonders bevorzugt handelt es sich bei der Komponente C2) um Melaminpolyphosphat. Melaminpolyphosphat ist in diversen Produktqualitäten kommerziell verfügbar. Beispiele hierfür sind u.a. Melapur^{®} 200/70 (Fa. CIBA Melapur, Basel, Schweiz) sowie Budit^{®} 3141 (Fa. Budenheim, Budenheim, Deutschland).

Als Komponente D) enthalten die Zusammensetzungen erfindungsgemäß 0,1 bis 10 Gew.-%, bevorzugt 0,5 bis 5 Gew.-% besonders bevorzugt 0,75 bis 3,5 Gew.-% mindestens eine Metallverbindung der Reihe ZnO, insbesondere aktiviertes ZnO (z.B. Bayer AG, Leverkusen, Deutschland), ZnS, TiO₂, MgCO₃, CaCO₃, Zinkborat, CaO, MgO, Mg(OH)₂, TiN, Bornitrid, Mg₃N₂, Zn₃N₂, Zn₃(PO₄)₂, Ca₃(PO₄)₂, Calciumborat, Magnesiumborat oder deren Mischungen. Erfindungsgemäß besonders bevorzugt sind Zinkborat und Zinksulfid. Das Zinksulfid wird in der Regel als partikelförmiger Feststoff eingesetzt. Kommerziell erhältliche Produkte sind beispielsweise Sachtolith^{®} HDS oder Sachtolith^{®} HD (beide Fa. Sachtleben, Duisburg, Deutschland). Unter dem Begriff Zinkborat im Rahmen der vorliegenden Erfindung sollen Substanzen verstanden werden, die aus Zinkoxid und Borsäure zugänglich sind. Es sind verschiedene Hydrate der Zinkborate bekannt, z.B. ZnO·B₂O₃·2H₂O und 2 ZnO·3 B₂O₃·3,5 H₂O, wobei Verbindungen der beiden vorgenannten Zusammensetzungen bevorzugt sind. Beispiele für einsetzbare Zinkborate sind in Gmelin Syst.-Nr.32, Zn, 1924, S. 248, Erg.-Bd., 1956, S. 971-972, Kirk-Othmer (4.) 4, 407-408, 10, 942; Ullmann (5.) A 4, 276; Winnacker-Küchler (4.) 2, 556 beschrieben. Kommerziell verfügbare Zinkboratqualitäten sind u.a. die Produkte ZB-223, ZB-467 und ZB-Lite der Fa. Anzon Ltd. (London, England) oder Firebrake^{®} ZB der Fa. Deutsche Borax GmbH (Sulzbach, Deutschland).

Ebenso können die Komponenten D) als kompaktiertes Material sowie als Masterbatches in einem polymeren Trägermaterial eingesetzt werden. Die Komponenten D) können ferner oberflächenbehandelt bzw. mit bekannten Mitteln beschichtet sein. Hierzu zählen u.a. organische Verbindungen, die in monomerer, oligomerer und/oder polymerer Form aufgebracht sein können. Beschichtungen mit anorganischen Komponenten sind ebenfalls möglich.

Gegebenenfalls als Komponente E) können die Zusammensetzungen in einer bevorzugten Ausführungsform zusätzlich Gleit- und/oder Entformungsmittel enthalten. Hierzu eignen sich beispielsweise langkettige Fettsäuren (z.B. Stearinsäure oder Behensäure), deren Salze (z.B. Ca- oder Zn-Stearat) sowie deren Esterderivate oder Amidderivate (z.B. Ethylen-bis-stearylamid), Montanwachse (Mischungen aus geradkettigen, gesättigten Carbonsäuren mit Kettenlängen von 28 bis 32 C-Atomen) sowie niedermolekulare Polyethylen- bzw. Polypropylenwachse. Erfindungsgemäß werden bevorzugt Gleit- und/oder Entformungsmittel aus der Gruppe der Ester oder Amide gesättigter oder ungesättigter aliphatischer Carbonsäuren mit 8 bis 40 C-Atomen mit aliphatischen gesättigten Alkoholen oder Aminen mit 2 bis 40 C-Atomen eingesetzt, wobei Ethylen-bis-stearylamid oder Pentaerythrit-tetrastearat (PETS) ganz besonders bevorzugt sind.

Gegebenenfalls als Komponente F) können die Zusammensetzungen in einer weiteren bevorzugten Ausführungsform entweder zusätzlich zu E) oder alternativ zu E) einen oder mehrere Füll- und Verstärkungsstoffe enthalten. Als faser- oder teilchenförmige Füllstoffe und Verstärkungsstoffe für die erfindungsgemäßen Formmassen können Glasfasern, Glaskugeln, Glasgewebe, Glasmatten, Kohlenstofffasern, thermisch beständige organische Fasern (z.B. Aramid- oder Polyphthalimidfasern), Kaliumtitanat-Fasern, Naturfasern, amorphe Kieselsäure, Magnesiumcarbonat, Bariumsulfat, Feldspat, Glimmer, Silikate, Quarz, Kaolin, calciniertes Kaolin, Titandioxid, Wollastonit sowie nanoskalige Mineralien (z.B. Montmorillonite oder Nano-Böhmit) u.a. zugesetzt werden, die auch oberflächenbehandelt sein können. Bevorzugte Verstärkungsstoffe sind handelsübliche Glasfasern. Die Glasfasern, die im allgemeinen einen Faserdurchmesser zwischen 8 und 18 µm haben, können als Endlosfasern oder als geschnittene oder gemahlene Glasfasern zugesetzt werden, wobei die Fasern ggf. mit Oberflächenmodifizierungen wie z.B. Silanen oder Glasfaserschlichten versehen sein können. Geeignet sind auch nadelförmige mineralische Füllstoffe. Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 2:1 bis 35:1, bevorzugt von 3:1 bis 19:1 am meisten bevorzugt von 4:1 bis 12:1 auf. Die mittlere Teilchengröße der erfindungsgemäßen nadelförmigen Mineralien liegt bevorzugt bei kleiner 20 µm, besonders bevorzugt bei kleiner 15 µm, insbesondere bevorzugt bei kleiner 10 µm, am meisten bevorzugt bei kleiner 5 µm, bestimmt mit einem CILAS GRANULOMETER. Der mineralische Füllstoff kann gegebenenfalls oberflächenbehandelt sein. Die als Komponente F) gegebenenfalls einzusetzenden Füll- und Verstärkungsstoffe werden in Mengen von 0,1 bis 60 Gew.-%, bevorzugt 1 bis 50 Gew.-%, besonders bevorzugt 10 bis 40 Gew.-% jeweils bezogen auf die Gesamtformmasse eingesetzt. Am meisten bevorzugt sind handelsübliche Glasfasern mit einem Faserdurchmesser zwischen 8 und 18 µm, die mit Oberflächenmodifizierungen, wie z.B. Silanen oder Glasfaserschlichten, sowie mit nadelförmigen mineralischen Füllstoffen, insbesondere Wollastonit das ebenfalls mit einer Oberflächenmodifizierung ausgestattet sein kann, versehen sein können.

Gegebenenfalls als Komponente G) können die Zusammensetzungen in einer weiteren bevorzugten Ausführungsform entweder zusätzlich zu den Komponenten E) und F) oder anstelle der Komponenten E) und/oder F) weitere Additive enthalten. Übliche Additive der Komponente G) sind z.B. Stabilisatoren (zum Beispiel UV-Stabilisatoren, Thermostabilisatoren, Gammastrahlenstabilisatoren, Hydrolysestabilisatoren), Antistatika, weitere Flammschutzmittel, Emulgatoren, Nukleierungsmittel, Weichmacher, Verarbeitungshilfsmittel, Schlagzähmodifikatoren, Farbstoffe und Pigmente. Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001. Die Additive können alleine oder in Mischung bzw. in Form von Masterbatchen eingesetzt werden.

Als Stabilisatoren können zum Beispiel sterisch gehinderte Phenole und/oder Phosphite, Hydrochinone, aromatische sekundäre Amine wie Diphenylamine, substituierte Resorcine, Salicylate, Benzotriazole und Benzophenone, sowie verschieden substituierte Vertreter dieser Gruppen und deren Mischungen eingesetzt werden.

Als UV-Stabilisatoren seien verschiedene substituierte Resorcine, Salicylate, Benzotriazole und Benzophenone genannt.

Im Falle von Schlagzähmodifikatoren (Elastomermodifikatoren, Modifikatoren) handelt es sich ganz allgemein um Copolymerisate, die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Es können anorganische Pigmente, wie Titandioxid, Ultramarinblau, Eisenoxid, Zinksulfid und Ruß, weiterhin organische Pigmente, wie Phthalocyanine, Chinacridone, Perylene sowie Farbstoffe, wie Nigrosin und Anthrachinone als Farbmittel sowie andere Farbmittel zugesetzt werden. Im Rahmen der vorliegenden Erfindung ist die Verwendung von Ruß bevorzugt.

Als Nukleierungsmittel können z.B. Natrium- oder Calciumphenylphosphinat, Aluminiumoxid oder Siliziumdioxid sowie bevorzugt Talkum eingesetzt werden.

Als Verarbeitungshilfsmittel können zum Beispiel Copolymerisate aus mindestens einem α-Olefin mit mindestens einem Methacrylsäurester oder Acrylsäureester eines aliphatischen Alkohols eingesetzt werden. Bevorzugt sind dabei Copolymerisate, bei denen das α-Olefin aus Ethen und/oder Propen aufgebaut ist und der Methacrylsäurester oder Acrylsäureester als Alkoholkomponente lineare oder verzweigte Alkylgruppen mit 6 bis 20C-Atomen enthält. Besonders bevorzugt ist Acrylsäure-(2-ethyl)-hexylester.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid genannt.

Als weitere Flammschutzmittel kommen z.B. phosphorhaltige Flammschutzmittel ausgewählt aus den Gruppen der mono- und oligomeren Phosphor- und Phosphonsäureester, Phosphonatamine, Phosphonate, Phosphinate, Phosphite, Hypophosphite, Phosphinoxide und Phosphazene, wobei auch Mischungen von mehreren Komponenten ausgewählt aus einer oder verschiedenen dieser Gruppen als Flammschutzmittel zum Einsatz kommen können, in Frage. Auch andere hier nicht speziell erwähnte vorzugsweise halogenfreie Phosphorverbindungen können alleine oder in beliebiger Kombination mit anderen vorzugsweise halogenfreien Phosphorverbindungen eingesetzt werden. Hierzu zählen auch rein anorganische Phosphorverbindungen wie Borphosphathydrat. Ferner können auch Salze aliphatischer und aromatischer Sulfonsäuren und mineralische Flammschutzadditive wie Aluminium- und/oder Magnesiumhydroxid, Ca-Mg-Carbonat-Hydrate (z.B. DE-A 4 236 122 (= CA 2 109 024 A1) Molybdänoxid, Zinkoxid, Magnesiumoxid sowie Zinksalze und Magnesiumsalze eingesetzt werden. Weitere geeignete Flammschutzadditive sind Kohlebildner wie Phenol-Formaldehydharze, Polycarbonate, Polyphenylether, Polyimide, Polysulfone, Polyethersulfone, Polyphenylsulfide und Polyetherketone sowie Antitropfmittel wie Tetrafluorethylenpolymerisate.

Die Additive der Komponente G) können in einer bevorzugten Ausführungsform den erfindungsgemäßen Zusammensetzungen in Mengen von 0,01 bis 40 Gew.-%, bevorzugt 0,01 bis 20 Gew.-%, besonders bevorzugt 0,1 bis 15 Gew.-% jeweils bezogen auf die Gesamtformmasse zugesetzt werden.

Die vorliegende Erfindung betrifft aber auch die Fasern, Folien und Formkörper erhältlich aus den thermoplastischen Formmassen enthaltend
A) 20 bis 97 Gew.-% eines unverzweigten thermoplastischen Polyamids,
B) 1 bis 30 Gew.-%, bevorzugt 1 bis 20 Gew.-%, besonders bevorzugt 5 bis 15 Gew.-%, der Gesamtzusammensetzung eines oder mehrerer Phosphinsäuresalze der Formel (I) und/oder eines oder mehrerer Diphosphinsäuresalze der Formel (II) und/oder deren Polymere, 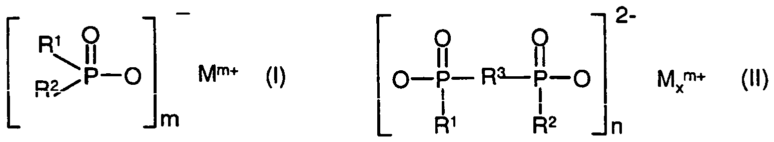 worin
   - R¹, R²: gleich oder verschieden sind und für Wasserstoff und/oder für lineares oder verzweigtes C₁-C₆-Alkyl und/oder für Aryl stehen;
   - R³: für lineares oder verzweigtes C₁-C₁₀-Alkylen, C₆-C₁₀-Arylen oder für C₁-C₆-Alkylarylen oder Aryl-C₁-C₆-alkylen steht,
   - M: für Erdalkalimetalle, Alkalimetalle, Aluminium, Zink, Titan, Zirkon, Silizium, Zinn und/oder eine protonierte Stickstoffbase steht;
   - m: für 1 bis 4 steht;
   - n: für 1 bis 3 steht und
   - x: für 1 und 2 steht,
C) 1-40 Gew.% einer stickstoffhaltigen Flammschutzmittelkombination aus
   C1) 0,1 bis 25 Gew.-%, bevorzugt 0,2 bis 10%, besonders bevorzugt 0,5 bis 5% bezogen auf 100 Gew.% der Gesamtzusammensetzung Melamincyanurat und
   C2) 0,1 bis 25 Gew.%, bevorzugt 1 bis 15 Gew.%, besonders bevorzugt 2 bis 10 Gew.% bezogen auf 100 Gew.% der Gesamtzusammensetzung, mindestens eines weiteren stickstoffhaltigen Flammschutzmittels ungleich Melamincyanurat, bevorzugt Umsetzungsprodukte des Melamins mit Phosphorsäure oder kondensierten Phosphorsäuren bzw. Umsetzungsprodukte von Kondensationsprodukten des Melamins mit Phosphorsäure oder kondensierten Phosphorsäuren, besonders bevorzugt Melaminpolyphosphat, Melampolyphosphat, Melonpolyphosphat und Melempolyphosphat, ganz besonders bevorzugt Melaminpolyphosphat, und
D) 0,1 bis 10 Gew.%, bevorzugt 0,5 bis 5 Gew.% besonders bevorzugt 0,75 bis 3,5 Gew.% mindestens einer Metallverbindung der Reihe ZnO, ZnS, TiO₂, MgCO₃, CaCO₃, Zinkborat, CaO, MgO, Mg(OH)₂, TiN, Bornitrid, Mg₃N₂, Zn₃N₂, Zn₃(PO₄)₂, Ca₃(PO₄)₂, Calciumborat, Magnesiumborat oder deren Mischungen, besonders bevorzugt Zinkborat und Zinksulfid.

In einer bevorzugten Ausführungsform betrifft die vorliegende Erfindung auch Fasern, Folien und Formkörper die zusätzlich zu den Komponenten A) bis D) gegebenenfalls ein oder mehrere der Komponenten E) und/oder F) und/oder G) enthalten.

Schließlich betrifft die vorliegende Erfindung auch ein Verfahren zur Herstellung von Fasern, Folien und Formkörpern, dadurch gekennzeichnet, dass man Formmassen, enthaltend die Komponenten A bis D) sowie in bevorzugten Ausführungen noch gegebenenfalls E), F) und/oder G), einsetzt.

### Beispiele

Zum Nachweis der erfindungemäß beschriebenen Verbesserungen bei Flammwidrigkeit und Mechanik wurden zunächst durch Compoundierung entsprechende Kunststoff-Formmassen angefertigt. Die einzelnen Komponenten wurden hierzu in einem Zweiwellenextruder (ZSK 32 Mega Compounder der Fa. Coperion Werner & Pfleiderer (Stuttgart, Deutschland)) bei Temperaturen zwischen 270 und 335°C gemischt, als Strang ausgetragen, bis zur Granulierfähigkeit abgekühlt und granuliert. Nach dem Trocknen (in der Regel zwei Tage bei 70°C im Vakuumtrockenschrank) erfolgte die Verarbeitung des Granulates bei Temperaturen zwischen 270 und 300°C zu Normprüfkörpern für die UL94V Prüfung, zu Prüfkörpern für die Glühdrahtprüfungnach IEC 60695-2-12 sowie zu Prüfkörpern für die mechanischen Untersuchungen nach ISO 180/1U (IZOD Schlagzähigkeit) und ISO 178 (Biegeversuch), mit deren Hilfe die Brandeigenschaften sowie die mechanischen Werte der erfindungsgemäßen Formmassen ermittelt wurden.

Die Flammwidrigkeit der Formmassen wurde zum einen nach der Methode UL94V (Underwriters Laboratories Inc. Standard of Safety, "Test for Flammability of Plastic Materials for Parts in Devices and Appliances", S. 14 bis S. 18 Northbrook 1998) bestimmt.

Die Glühdrahtbeständigkeit wurde anhand der Glühdrahtprüfung GWFI (Glow-Wire Flammability-Index) nach IEC 60695-2-12 sowie an der Glühdrahtentzündlichkeitsprüfung GWIT (Glow-Wire-Ignition-Temperature) nach 60695-2-13 bestimmt. Bei der GWFI-Prüfung wird an 3 Prüfkörpern (beispielsweise an Platten der Geometrie 60 x 60 x 1,5 mm) mit Hilfe eines glühenden Drahtes bei Temperaturen zwischen 550 und 960°C die maximale Temperatur ermittelt, bei der eine Nachbrennzeit von 30 Sekunden nicht überschritten wird und die Probe nicht brennend abtropft. Bei der GWIT-Prüfung wird bei einer vergleichbaren Messprozedur die Glühdrahtentzündungstemperatur angegeben, die 25K (30K zwischen 900°C und 960°C) höher ist als die maximale Glühdrahttemperatur, die in 3 aufeinander folgenden Tests auch während der Einwirkzeit des Glühdrahtes nicht zur Entzündung führt. Als Entzündung gilt dabei eine Flamme mit Brennzeit ≥ 5sec. Vor dem Hintergrund der IEC 60335-1, die bei einer der IEC 60695-2-13 vergleichbaren Prüfung am Fertigteil (z.B. an einer fertig montierten Steckerleiste) bei einer Glühdrahttemperatur von 750°C nur eine Entzündung mit Flamme von maximal 2 sec Dauer zulässt, wird in den relevanten Beispielen zusätzlich die maximale Brennzeit bei einer 30 sec andauernden Glühdrahteinwirkung bei 750°C angegeben.

Mechanische Kennwerte erhielt man aus Schlagzähigkeitsmessungen nach IZOD (ISO 180/1U, 23°C) oder aus Biegeexperimenten gemäß ISO 178.

In den Versuchen wurden verwendet:
Komponente A: Polyamid 6 (Durethan^{®} B29, Fa. Lanxess Deutschland GmbH (Gruppe Lanxess), Leverkusen, Deutschland)
Komponente B: System nach Formel (I) mit R¹ = R² = Ethyl und M = Aluminium [gemäß EP-A 803508 / EP-A 944637]
Komponente C/1: Melamincyanurat, (Melapur^{®} MC25, der Fa. CIBA, Basel, Schweiz)
Komponente C/2: Melaminpolyphosphat (Melapur^{®} 200/70 der Fa. CIBA, Basel, Niederlande)
Komponente D/1: Zinkborat (Firebrake^{®} ZB der Fa. Deutsche Borax GmbH, Sulzbach, Deutschland)
Komponente D/2: Zinksulfid (Sachtolith^{®}HDS der Fa. Sachtleben, Duisburg, Deutschland)
Komponente E: N,N'-Ethylen-bis-stearylamid
Komponente F: Schnittglasfaser CS 7928 der Fa. Lanxess Deutschland GmbH
Komponente G: weitere Additive
wobei sich die Summe der Anteile der Komponenten zu 100 Gew.-% ergänzt.

**Tabelle1**

| **Komponente** | **V1** | **V2** | **V3** | **Vgl1** | **Vgl2** | **Vgl3** |
|---|---|---|---|---|---|---|
| A | 49,4 | 51,4 | 48,4 | 51,4 | 48,4 | 45,4 |
| B | 10 | 10 | 10 | 10 | 10 | 10 |
| C/1 | 3 | 2 | 3 | 3 | 6 | 9 |
| C/2 | 5 | 5 | 5 | 5 | 5 | 5 |
| D/1 | 2 | 1 | 3 | 0 | 0 | 0 |
| E | 0,3 | 0,3 | 0,3 | 0,3 | 0,3 | 0,3 |
| F | 30 | 30 | 30 | 30 | 30 | 30 |
| G | 0,3 | 0,3 | 0,3 | 0,3 | 0,3 | 0,3 |
| UL 94 (0.8 /1.6 mm) | V0/V0 | - / V0 | V0/V0 | -/V0 | -/V-0 | -/V-0 |
| GWFI (0.75 mm) | 960°C | - | 960°C | - | - | - |
| GWFI (1.5 mm) | 960°C | 960°C | 960°C | 960°C | 960°C | 850°C |
| GWIT (0.75 mm) | 775°C | - | 775°C | - | - | - |
| GWIT (1.5 mm) | 800°C - | 775°C | 800°C | 700°C | 725°C | 700°C |
| GWIT (3.0 mm) | >775°C | - | >775°C | - | - | - |
| IEC 60695-2-13: Brennzeit bei 750°C (0.75 mm) in sec | 0 | - | 0 | - | - | - |
| IEC 60695-2-13: Brennzeit bei 750°C (1.5 mm) in sec | 0 | 0 | 0 | > 5 | >5 | > 5 |
| IEC 60695-2-13: Brennzeit bei 750°C (3.0 mm) in sec | 0 | - | 0 | - | - | - |
| IZOD Schlagzähigkeit (ISO 180/IU 23 °C) | 55 kJ/m² | 56 kJ/m² | 50 kJ/m² | 34 kJ/m² | 32kJ/m² | 25 kJ/m² |
| Randfaserdehnung bei Höchstkraft | 3,2 % | 3,3 % | 3,0 % | 2,5 % | 2,3 % | 2,2 % |
| Biegefestigkeit [MPa] | 224 | 227 | 217 | 210 | 202 | 199 |

| | | | | | | |
|---|---|---|---|---|---|---|
| Angaben der Komponenten in Gew.-% bezogen auf die Gesamtformmasse | | | | | | |

**Tabelle 2**

| **Komponente** | **Vgl4** | **Vgl5** | **Vgl6** | **Vgl7** | **Vgl8** |
|---|---|---|---|---|---|
| A | 52,4 | 50,4 | 52,4 | 50,4 | 54,4 |
| B | 10 | 10 | 10 | 10 | 10 |
| C/1 | 0 | 0 | 0 | 0 | 0 |
| C/2 | 5 | 5 | 5 | 5 | 5 |
| D/1 | 2 | 4 | | | 0 |
| D/2 | | | 2 | 4 | |
| E | 0,3 | 0,3 | 0,3 | 0,3 | 0,3 |
| F | 30 | 30 | 30 | 30 | 30 |
| G | 0,3 | 0,3 | 0,3 | 0,3 | 0,3 |
| UL 94 (0.8 /1.6 mm) | /V-0 | -/V-1 | - /V-0 | -/V-0 | -/V-0 |
| GWFI (0.75 mm) | - | - | - | - | - |
| GWFI (1.5 mm) | 900°C | 850°C | 850°C | 850°C | 900°C |
| GWIT (0.75 mm) | - | - | - | - | - |
| GWIT (1.5 mm) | 750°C | - | 725 °C | - | 725°C |
| GWIT (3.0 mm) | - | - | - | - | - |
| IEC 60695-2-13: Brennzeit bei 750°C (0.75 mm) in sec | - | - | - | - | - |
| IEC 60695-2-13: Brennzeit bei 750°C (1.5 mm) in sec | > 5 | - | > 5 | - | > 5 |
| IEC 60695-2-13: Brennzeit bei 750°C (3.0 mm) in sec | - | - | - | - | - |
| IZOD Schlagzähigkeit (ISO 180/1U 23°C) | 41kJ/m² | 32 kJ/m² | 54 kJ/m² | 53 kJ/m² | 60 kJ/m² |
| Randfaserdehnung bei Höchstkraft | 2,7 % | 2,2 % | 3,3 % | 3,3 % | 3,5 % |
| Biegefestigkeit [MPa] | 200 | 178 | 229 | 227 | 248 |

| | | | | | |
|---|---|---|---|---|---|
| Angaben der Komponenten in Gew.-% bezogen auf die Gesamtformmasse | | | | | |

**Tabelle 3**

| **Komponente** | **Vgl9** | **Vgl10** | **Vgl11** | **Vgl12** |
|---|---|---|---|---|
| A | 50,7 | 50,4 | 51,4 | 46,4 |
| B | 11,3 | 11,3 | 12 | 12 |
| C/1 | 2 | 0 | 0 | 2 |
| C/2 | 5,7 | 5,7 | 6 | 6 |
| D/1 | 0 | 2 | 0 | 3 |
| E | 0 | 0,3 | 0,3 | 0,3 |
| F | 30 | 30 | 30 | 30 |
| G | 0,3 | 0,3 | 0,3 | 0,3 |
| UL 94 (0.8 /1.6 mm) | V2 / V0 | V0 / V0 | V2 / V0 | V2 / V0 |
| GWFI (0.75 mm) | - | - | - | - |
| GWFI (1.5 mm) | - | - | - | - |
| GWIT (0.75 mm) | 675°C | 675°C | 675°C | 675°C |
| GWIT(1.5mm) | 675°C | 700°C | 675°C | 675°C |
| GWIT (3.0 mm) | - | - | - | - |
| IEC 60695-2-13: Brennzeit bei 750°C (0.75 mm) in sec | > 5 | >5 | > 5 | > 5 |
| IEC 60695-2-13: Brennzeit bei 750°C (1.5 mm) in sec | >5 | > 5 | > 5 | >5 |
| IEC 60695-2-13: Brennzeit bei 750°C (3.0 mm) in sec | - | - | - | - |
| IZOD Schlagzähigkeit (ISO 180/1U 23 °C) | 54kJ/m² | 49 kJ/m² | 51 kJ/m² | 46 kJ/m² |
| Randfaserdehnung bei Höchstkraft | 3,3 % | 3,1 % | 3,3 % | 3,0 % |
| Biegefestigkeit [MPa] | 234 | 215 | 229 | 220 |

| | | | | |
|---|---|---|---|---|
| Angaben der Komponenten in Gew.-% bezogen auf die Gesamtformmasse | | | | |

Tabelle 1 bis 3 zeigt, dass die erfindungsgemäße spezielle halogenfreie Kombination der Komponenten B), C/1), C/2) und D/1) (Beispiel V1, V2 und V3) sowohl hinsichtlich der Flammwidrigkeit (UL94 V0, GWFI 960°C und GWIT 775°C) als auch hinsichtlich der Mechanik (Schlagzähigkeit und Biegefestigkeit) gegenüber dem Stand der Technik eine drastische Verbesserung darstellt. Die Vergleichsbeispiele zeigen ferner, dass ein Verzicht auf die Komponente D1 nicht durch Höherdosierung von C1 kompensiert werden kann (Vgl. 1, 2 und 3), ohne dabei mit Nachteile bei GWIT-Verhalten und Mechanik konfrontiert zu sein. Selbiges gilt auch für ein Verzicht von C1 und eine Höherdosierung von D1 (Vgl. 4 und 5). Bei Entfall sowohl der Komponente C1) als auch D1) bleiben zwar die mechanischen Eigenschaften auf hohem Niveau erhalten, die Glühdrahtentzündlichkeit bleibt aber weit unter den Anforderungen (Vgl. 8). Die geschilderte Charakteristik bleibt auch dann unverändert, wenn man den Anteil der Phosphinat-komponente B und der zweiten Stickstoffhaltigen Komponente C2) erhöht (Vgl. 9-12).

## Patentansprüche

1. Formmassen enthaltend
A) 20 bis 97 Gew.% eines unverzweigten thermoplastischen Polyamids,
B) 1 bis 30 Gew.%, der Gesamtzusammensetzung eines oder mehrerer Phosphinsäuresalze der Formel (I) und/oder eines oder mehrere Diphosphinsäuresalze der Formel (II) und/oder deren Polymere, 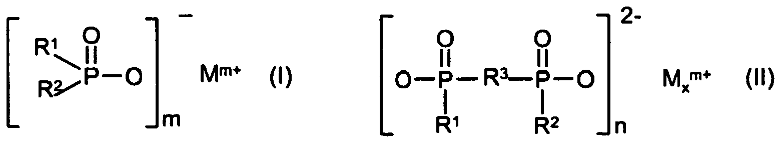 worin
R¹, R² gleich oder verschieden sind und für Wasserstoff und/oder für lineares oder verzweigtes C₁-C₆-Alkyl, und/oder für Aryl stehen,
R³ für lineares oder verzweigtes C₁-C₁₀-Alkylen, C₆-C₁₀-Arylen oder für C₁-C₆-Alkylarylen oder Aryl-C₁-C₆-alkylen steht,
M für Erdalkalimetalle, Alkalimetalle, Aluminium, Zink, Titan, Zirkon, Silizium, Zinn und/oder eine protonierte Stickstoffbase steht,
m für 1 bis 4 steht,
n für 1 bis 3 steht,
x für 1 und 2 steht,
C) 1-40 Gew.-% einer stickstoffhaltigen Flammschutzmittelkombination aus
C1) 0, 1 bis 25 Gew.-%, bezogen auf 100 des Gesamtzusammensetzung Melamincyanurat und
C2) mindestens 0,1 bis 25 Gew.%, bezogen auf 100 Gew.% der Gesamtzusammensetzung eines Umsetzungsprodukts des Melamins mit Phosphorsäure oder kondensierten Phosphorsäuren bzw. eines Umsetzungsprodukts von Kondensationsprodukten des Melamins mit Phosphorsäure oder kondensierten Phosphorsäuren sowie Gemische der genannten Produkte, und
D) 0,1 bis 10 Gew.% der Gesamtzusammensetzung mindestens einer Metallverbindung der Reihe ZnO, ZnS, TiO₂, MgCO₃, CaCO₃, Zinkborat, CaO, MgO, Mg(OH)₂, TiN, Bornitrid, Mg₃N₂, Zn₃N₂, Zn₃(PO₄)₂, Ca₃(PO₄)₂, Calciumborat, Magnesiumborat oder deren Mischungen.

2. Formmassen gemäß Anspruch 1, **dadurch gekennzeichnet, dass** sie zusätzlich zu den Komponenten A), B), C1), C2) und D) noch E) 0,01 bis 5 Gew.-%, mindestens eines Gleit- und/oder Entformungsmittels enthalten.

3. Formmassen gemäß einem der Ansprüche 1 oder 2, **dadurch gekennzeichnet, dass** diese zusätzlich die Komponente
F) 0,1 bis 60 Gew.% eines oder mehrerer Füll- und Verstärkungsstoffe enthalten.

4. Formmassen gemäß einem der Ansprüche 1, 2 oder 3, **dadurch gekennzeichnet, dass** diese zusätzlich die Komponente G) 0,01 bis 40 Gew.% bezogen auf die Gesamtzusammensetzung weitere Additive enthalten.

5. Verfahren zur Herstellung von Fasern, Folien und Formkörpern, **dadurch gekennzeichnet, dass** Formmassen gemäß einem der Ansprüche 1 bis 4 eingesetzt werden.

6. Fasern, Folien und Formkörper erhältlich durch Einsatz von Formmassen gemäß einem der Ansprüche 1, 2, 3 oder 4.

7. Verwendung der Formmassen gemäß der Ansprüche 1 bis 4 zur Herstellung halogenfreier flammgeschützter Folien, Fasern oder Formkörper.

## Claims

1. Moulding compositions comprising
A) from 20 to 97% by weight of an unbranched thermoplastic polyamide,
B) from 1 to 30% by weight, based on the entire composition, of one or more phosphinic salts of the formula (I) and/or of one or more diphosphinic salts of the formula (II) and/or polymers of these, 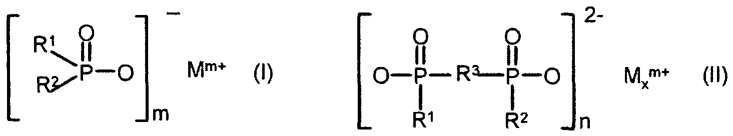 in which
R¹ and R² are identical or different and are hydrogen and/or linear or branched C₁-C₆-alkyl and/or are aryl,
R³ is linear or branched C₁-C₁₀-alkylene or C₆-C₁₀-arylene or is C₁-C₆-alkylarylene or aryl-C₁-C₆-alkylene,
M is alkaline earth metals, alkali metals, aluminium, zinc, titanium, zirconium, silicon, tin and/or a protonated nitrogen base,
m is from 1 to 4,
n is from 1 to 3,
x is 1 and 2,
C) from 1 to 40% by weight of a nitrogen-containing flame retardant combination composed of
C1) from 0.1 to 25% by weight, based on 100% by weight of the entire composition, of melamine cyanurate and
C2) at least 0.1 to 25% by weight, based on 100% by weight of the entire composition, a reaction product of melamine with phosphoric acid or with condensed phosphoric acids or, respectively, a reaction product of condensates of melamine with phosphoric acid or with condensed phosphoric acids, or else a mixture of the products mentioned, and
D) 0.1 to 10% by weight, based on the entire composition, of at least one metal compound from the group of ZnO, ZnS, TiO₂, MgCO₃, CaCO₃, zinc borate, CaO, MgO, Mg(OH)_{2,} TiN, boron nitride, Mg₃N₂, Zn₃N₂, Zn₃(PO₄)₂, Ca₃(PO₄)₂, calcium borate, magnesium borate, or a mixture of these.

2. Moulding compositions according to Claim 1, **characterized in that** they not only comprise components A), B), C1), C2) and D) but also comprise E) from 0.01 to 5% by weight of at least one lubricant and/or mould-release agent.

3. Moulding compositions according to Claim 1 or 2, **characterized in that** these also comprise component
F) from 0.1 to 60% by weight of one or more fillers and reinforcing materials.

4. Moulding compositions according to any of Claims 1, 2 or 3, **characterized in that** these also comprise component G) 0.01 to 40% by weight, based on the entire composition, of other additives.

5. Process for production of fibres, of foils and of mouldings, **characterized in that** moulding compositions according to any of Claims 1 to 4 are used.

6. Fibres, foils and mouldings obtainable via use of moulding compositions according to any of Claims 1, 2, 3 or 4.

7. Use of the moulding compositions according to Claims 1 to 4 for production of halogen-free flame-retardant foils, fibres or mouldings.

## Revendications

1. Masses de moulage, contenant
A) 20 à 97% en poids d'un polyamide thermoplastique non ramifié,
B) 1 à 30% en poids de la composition totale d'un ou de plusieurs sels de l'acide phosphinique de formule (I) et/ou d'un ou de plusieurs sels de l'acide diphosphonique de formule (II) et/ou de leurs polymères, 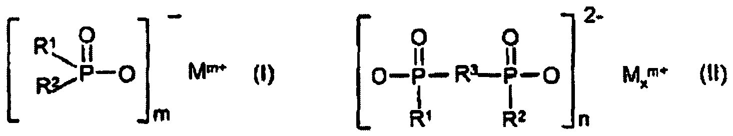 où
R¹, R² sont identiques ou différents et représentent hydrogène et/ou C₁-C₆-alkyle linéaire ou ramifié et/ou aryle
R³ représente C₁-C₁₀-alkylène linéaire ou ramifié, C₆-C₁₀-arylène ou C₁-C₆-alkylarylène ou aryl-C₁-C₆-alkylène,
M représente des métaux alcalino-terreux, des métaux alcalins, aluminium, zinc, titane, zirconium, silicium, étain et/ou une base azotée protonée,
m vaut 1 à 4,
n vaut 1 à 3,
x vaut 1 et 2,
C) 1-40% en poids d'une combinaison d'agents ignifuges azotés constituée par
C1) 0,1 à 25% en poids, par rapport à 100% en poids de la composition totale, de mélamine-cyanurate et
C2) au moins 0,1 à 25% en poids, par rapport à 100% en poids de la composition totale, d'un produit de transformation de la mélamine avec de l'acide phosphorique ou des acides phosphoriques condensés ou, selon le cas, d'un produit de transformation de produits de condensation de la mélamine avec de l'acide phosphorique ou des acides phosphoriques condensés ainsi que des mélanges des produits mentionnés, et
D) 0,1 à 10% en poids de la composition totale d'au moins un composé métallique de la série ZnO, ZnS, TiO₂, MgCO₃, CaCO₃, borate de zinc, CaO, MgO, Mg(OH)₂, TiN, nitrure de bore, Mg₃N₂, Zn₃N₂, Zn₃(PO₄)₂, Ca₃(PO₄)₂, borate de calcium, borate de magnésium ou leurs mélanges.

2. Masses de moulage selon la revendication 1, **caractérisées en ce qu'**elles contiennent, en plus des composants A), B), C1) , C2) et D) , encore E) 0,01 à 5% en poids d'au moins un agent lubrifiant et/ou de démoulage.

3. Masses de moulage selon l'une quelconque des revendications 1 ou 2, **caractérisées en ce qu'**elles contiennent en outre le composant
F) 0,1 à 60% en poids d'une ou de plusieurs charges et substances de renforcement.

4. Masses de moulage selon l'une quelconque des revendications 1, 2 ou 3, **caractérisées en ce qu'**elles contiennent en outre le composant G) 0,01 à 40% en poids, par rapport à la composition totale, d'autres additifs.

5. Procédé pour la fabrication de fibres, de feuilles et de corps moulés, **caractérisé en ce qu'**on utilise des masses de moulage selon l'une quelconque des revendications 1 à 4.

6. Fibres, feuilles et corps façonnés pouvant être obtenus par l'utilisation des masses de moulage selon l'une quelconque des revendications 1, 2, 3 ou 4.

7. Utilisation des masses de moulage thermoplastiques selon les revendications 1 à 4 pour la fabrication de feuilles, de fibres ou de corps moulés ignifuges, exempts d'halogènes.
